# DEMANDE DE BREVET EUROPEEN

(11) **EP 1 439 628 A1**
(43) Date de publication de la demande: **21.07.2004**
(21) Numéro de dépôt: 03078491.2
(22) Date de dépôt: 06.11.2003
(51) Int. Cl.: H02K 21/22, H02K 5/04, H02K 29/10, E05F 15/10

(54) **Moteur à rotor externe et à capteur de position intégré, et ses applications, notamment poulie motorisée**

(30) Priorité: 14.11.2002 FR 0214354
(71) Demandeur: Moteur Diffusion Partner SA, 01707 Neyron (FR)
(72) Inventeur: Nouvelot, Bertrand, 69270 Cailloux sur Fontaine (FR)
(74) Mandataire: Richebourg, Michel François

(57) **Abrégé**

L'invention concerne un moteur « brushtess » (sans balais) à rotor 3 externe, ne comportant qu'un seul capteur de position du rotor, et un codeur intégré 7, 9, sans réducteur, développant un couple important, de dimensions réduites, Le rotor externe comporte le circuit magnétique mobile, il transmet le couple directement par un moyen mécanique fixé sur le rotor externe; il comporte un capteur intégré de position du rotor.

Selon un mode de réalisation particulier, la surface extérieure 11 du rotor externe forme le profil du moyen d'entraînement , notamment celui d'une poulie d'entraînement.

L'utilisation d'un système magnétique comportant un grand nombre de pôles permet d'augmenter le diamètre d'entrefer et de réduire la masse du circuit magnétique, ce qui libère un volume important pour le bobinage 6, ce qui à son tour permet de générer un couple important malgré le volume réduit.

Applications notamment en intégration dans des poulies motorisées pour la commande de portes coulissantes, de bâtiments ou d'ascenseurs et analogues.

## Description

### Secteur technique de l'invention :

La présente invention concerne le secteur technique des moteurs électriques et des systèmes motorisés les comprenant.

Plus particulièrement, l'invention concerne le secteur technique des moteurs à rotor externe et leurs applications, notamment dans une poulie motorisée, et notamment pour la commande précise et sécurisée de portes.

### Art antérieur :

On connaît des moteurs de ce type à rotor intérieur et à stator externe.

On connaît également des moteurs de ce type à rotor extérieur et à stator central.

On citera le USP 4 673 848 Hagiwara / Yoshida. Ce document décrit un système de contrôle pour porte automatique qui comprend un moteur brushless (sans balais) à courant continu.

Le stator (avec bobinage 11) est autour du rotor. Le rotor comporte les éléments magnétiques 12 définissant des pôles magnétiques.

Un réducteur « de vitesse » est employé pour transmettre la puissance du moteur à la porte.

Lors de la rotation du champ magnétique (rotor intérieur) des « detection pulses » ou impulsions de détection sont envoyées vers :
- un circuit de contrôle de position de la porte qui régule par un « speed command signal » (signal de commande de vitesse) le sens et l' amplitude du mouvement de la porte
- un circuit de contrôle de vitesse qui reçoit et répond aussi au « speed command signal » afin que le moteur soit alimenté de telle sorte qu'il tourne à une vitesse correspondant à celle de la porte telle que représentée par le speed command signal.

Plusieurs capteurs de position du rotor produisent une séquence de magnetic pole position detection « pulses », c'est-à-dire d'impulsions de détection de position de pôle magnétique.

Ce système est censé être une amélioration par rapport aux systèmes anciens de détermination de la position de la porte, par exemple à interrupteurs en position limite, ou à contrôle numérique, ou à comptage par un système denté, etc.

Ces systèmes anciens nécessitaient donc un moyen distinct de contrôle de position de la porte (butée, contrôle denté etc...) pour chaque porte différente.

Le « problème technique » visé par ce brevet est de supprimer ce détecteur séparé de la position de la porte.

La « solution » réside dans la reconnaissance de la position de la porte par un « détecteur de position de pôle magnétique » intégré au moteur, et commande également la vitesse de la porte.

Le moteur M est couplé à la poulie 2 par un réducteur 1.

Trois détecteurs de position de pôle magnétique (effet Hall) sont montés sur le stator à 120 ° chacun. On obtient donc trois trains de « pulses » décalés en phase de 120 ° en réponse à la rotation du champ magnétique.

Ces trains d'impulsions servent à alimenter les deux systèmes de contrôle de la vitesse (et accélération) de la porte (avec un programme mémorisé des opérations d'ouverture et fermeture) et de contrôle de la vitesse du moteur par contrôle de l'alimentation de la bobine.

Il est précisé que grâce à l'emploi d'un moteur brushless à courant continu, le buzz noise ou bruit de bourdonnement est réduit. De plus, la commande de porte est plus précise.

Pour le reste, il s'agit d'une structure à rotor INTERNE et à réducteur entre le moteur et la poulie.

### USP 5 382 853 von der Heide / Papst

Ce document décrit un moteur brushless à courant continu et à rotor externe.

Le secteur technique est celui des « disc drives » ou systèmes d'entraînement de disques, ne posant pas les mêmes problèmes techniques.

Un art antérieur est décrit comme étant le Sextant Brushless DC disk Drive Sprindle de Rotron Inc, modèle 4700.

Il comporte un rotor à 4 pôles et un stator à bobines multiples à recouvrement. Il serait très volumineux, avec des performances médiocres et une difficulté de fabrication. Le brevet '853 vise un perfectionnement à ce moteur. L'amélioration porte sur un stator en « anneau » qui comporte plusieurs bobines, chacune étant bobinée autour d'un socle unique de « pôle » (single pole shoe), l'ensemble des bobines et de leur « shoe » formant un « premier ensemble de plusieurs bobines », un « second ensemble » et un « troisième ensemble ».Les shoes sont séparés par des fentes ou espaces (gaps).

Le rotor, qui est EXTERIEUR, comporte une structure annulaire magnétique permanente qui possède une pluralité de pôles dont le sens est alterné autour de la circonférence. Le stator est fabriqué selon un design « axial » « compact » et évite les « bobines encombrantes ». La résistance du bobinage est faible.

Un exemple comporte des bobinages 21 à 26 dont les socles sont diamètralement opposés deux à deux (les bobines le sont donc aussi). Chaque couple forme un des « ensembles » mentionnés plus haut.

Le rotor peut comporter plusieurs éléments en forme d'arc, avec des pôles alternés (nord, puis sud, etc... vers l'intérieur). 4 éléments donnent naturellement 4 pôles à 90°.

Le système comporte un détecteur de position de rotor. Son but est d'opérer au bon moment la commutation des bobines du stator. Il s'agit de trois capteurs à effet Hall , détecteurs de champ magnétique.

Ces « field sensors » ou détecteurs de champ commandent un régulateur de vitesse et au système logique, afin que « le moteur tourne précisément à une vitesse déterminée ».

Ce brevet vise à seulement réguler la vitesse d'entraînement à une valeur précise.

Il confirme l'enseignement du premier brevet US en ce qui concerne l'emploi des pôles pour détecter la position du rotor, mais avec encore trois capteurs du type à effet Hall.

### USP 5 217 353 De Fillipis / Magneti Marelli

Ventilateur pour moteurs automobiles, entraîné par un moteur électrique brushless à rotor EXTERNE.

La caractéristique porte sur un système d'orifices et canaux de refroidissement.

Aucune caractéristique ne porte sur le moteur, en dehors du fait que le rotor est externe, et rien n'est indiqué sur un contrôle de position ni sur le contrôle de vitesse du moteur ou analogue.

Ce document confirme la possibilité d'un rotor externe, mais ne comporte aucun enseignement quant aux problèmes de détection de position, de contrôle de vitesse, d'encombrement, etc.... et naturellement rien sur un réducteur.

### USP 5 588 814 De Fillipis / Bitron Spa

Il s'agit à nouveau d'un moteur pour ventilateur automobile.

Il s'agit de réduire les effets des vibrations et d'obtenir un meilleur refroidissement du ventilateur, notamment de ses composants électroniques, MOS etc....

### USP 5 661 351 von der Heide / Papst

Ce document décrit, comme le précédent du même inventeur, un disc drive system ou système d'entraînement de disque, qui ne pose pas les mêmes problèmes techniques..

### USP 5 661 351 von der Heide / Papst

Ce document décrit, comme les précédents du même inventeur, un disc drive system.

### USP 5 695 318 Harmsen / Papst Motoren

Ce document décrit un ventilateur « diagonal » pour le refroidissement de systèmes électroniques et analogues, et son moteur d'entraînement.

Ce drive motor ou moteur d'entraînement est de préférence brushless et est logé dans la cavité interne du tronc de cône du ventilateur, et possède un rotor externe. Il est précisé cependant que l'on peut tout aussi bien employer un moteur à rotor interne.

Ce document confirme la connaissance du rotor externe, mais ne comporte aucun enseignement quant à ce moteur. L'enseignement porte sur la conception du ventilateur (angles, ailettes, etc...).

L'art antérieur le plus proche est le brevet '848 Yoshida. car il est le seul à concerner le même problème technique.

Le rotor externe était connu, mais le SEUL document (Yoshida) qui traite d'un moteur pour porte ne l'emploie PAS.

On en déduit que, bien que connu dans diverses applications, l'emploi du rotor externe n'était pas logique ou recommandé dans une application de poulie motorisée ou application analogue.

Par ailleurs, YOSHIDA emploie un réducteur, et rien ne suggère, ni dans YOSHIDA ni dans d'autres documents, de le supprimer, ni qu'il soit intéressant de le supprimer, ni qu'il soit seulement peut être possible de le supprimer.

Ainsi, l'ensemble de l'art antérieur dirige l'homme de métier vers un rotor inteme (il semble difficile pour l'homme de métier de faire l'INVERSE de ce que recommande Yoshida, le seul document traitant du même problème), ne donne aucune indication selon laquelle on pourrait supprimer le réducteur de Yoshida, et détecte la position par trois capteurs, art antérieur connu que MDP évite.

De tels moteurs présentent l'inconvénient majeur d'un renvoi du mouvement et donc du couple par l'axe du moteur.

Leurs autres inconvénients sont une vitesse élevée par rapport au besoin ( dans un rapport 10) , des performances en couple réduites, des paliers peu propices aux charges radiales élevées.

Le couple peut être transmis par le rotor externe directement à une courroie ou analogue.

Cependant, les technologies actuelles, dans les applications envisagées, et notamment selon les brevets précités, ont contraint les concepteurs à prévoir un ensemble formé par le moteur, un réducteur de vitesse (motoréducteur) ainsi qu'un codeur externe. On emploie en général, cf. les brevets précités, un système de trois capteurs de position du rotor disposés à 120 ° les uns des autres, qui alimente un indicateur de position. L'angle déterminé par les capteurs conditionne ainsi l'envoi de l'alimentaion électrique vers telle ou telle bobine.

On connaît également des moteurs à codeur intégré, mais pas pour les moteurs dits « brushless » c'est-à-dire « sans balais ».

L'invention concerne au contraire un tel moteur « brushless » à rotor externe, ne comportant qu'un seul capteur de position du rotor, et un codeur intégré.

Il existe donc un besoin important et reconnu pour un tel moteur et pour les systèmes pouvant l'intégrer, notamment une poulie motorisée pour commande de porte, et analogues. Supprimer le réducteur serait également un avantage déterminant.

### Problème technique posé :

Le problème technique posé est de disposer d'un couple suffisamment puissant, produit par un moteur le plus léger et le moins encombrant possible, comportant un moyen de détection de position permettant de commander avec précision et sécurité , et éventuellement automatiser, le mouvement de la pièce à motoriser, notamment le coulissement d'une porte.

Les paramètres d'encombrement et de poids sont critiques, en ce sens qu'ils permettraient, s'ils étaient bien maîtrisés, d'incorporer le moteur à un organe du type poulie motorisée ou analogue.

Il est également important, dans ce genre d'applications, de réduire le bruit de fonctionnement, de réduire le coût, de disposer d'une réversibilité totale du mouvement, avec les mêmes avantages dans les deux sens, et une grande fiabilité.

L'éventualité de tenter de supprimer le réducteur, d'une part va à l'encontre des techniques connues, et d'autre part devrait logiquement s'opposer à l'obtention d'un couple suffisant.

De même, un encombrement réduit ne paraît pas devoir être compatible avec un couple suffisant, surtout si l'on cherche à supprimer le réducteur.

### Résumé de l'invention :

L'invention concerne cependant un tel moteur « brushless » à rotor externe, ne comportant qu'un seul capteur de position du rotor, et un codeur intégré, sans réducteur, développant un couple important, de dimensions réduites, et ses applications notamment en intégration dans des poulies motorisées pour la commande de portes coulissantes, de bâtiments ou d'ascenseurs et analogues..

### Description détaillée de l'invention :

L'invention concerne donc selon son premier aspect un moteur « brushless » (« sans balais ») du type à stator interne bobiné et rotor externe, caractérisé en ce que :
- il comporte un circuit magnétique multipolaire comportant un nombre de pôles fonction de la vitesse et du couple visés, notamment 2, 4, 6, 8 pour obtenir une vitesse élevée ou > 10, notamment 10, 12, 14 16, ..... pour obtenir un couple élevé.
- le rotor externe comporte le circuit magnétique mobile,
- il transmet le couple directement par un moyen mécanique fixé sur le rotor externe ;
- il comporte un capteur intégré de position du rotor.

Selon un mode de réalisation particulier, ladite surface extérieure du rotor externe forme le profil du moyen d'entraînement , notamment celui d'une poulie d'entraînement.

L'utilisation d'un système magnétique comportant un grand nombre de pôles permet d'augmenter le diamètre d'entrefer et de réduire la masse du circuit magnétique, ce qui libère un volume important pour le bobinage, ce qui à son tour permet de générer un couple important malgré le volume réduit.

Selon un mode de réalisation particulier, le nombre de pôles magnétiques est compris entre 2 et un nombre dépendant des impératifs économiques et techniques (sans qu'il y ait de limitation théorique sur cette valeur) et en particulier du couple et de la vitesse que l'on veut obtenir. L'homme de métier saura donc apprécier cette valeur en fonction des applications visées.

Notamment, l'homme de métier sait que plus le nombre de pôles augmente, par exemple au dessus de 10, plus on peut théoriquement augmenter les performances de couple du moteur. Se posent ensuite deux problèmes :
- le coût qui risque d'augmenter sensiblement au-delà d'un certain nombre de pôles, pour un gain de performances minimes et
- les pertes fer qui prennent vite des proportions importantes quand on monte en vitesse.

Par contre, si l'on souhaite des vitesses élevées, on réduira la polarité avec un nombre de pôles de 2 à 8 environ.

Les limites de 2 - 8 et > 10 sont évidemment des exemples non limitatifs.

D'une manière générale, l'homme de métier saura à chaque application nouvelle faire un choix de compromis entre performances et coût.

Selon un mode de réalisation particulier, non limitatif, ledit capteur de position consiste en un moyen permettant de détecter la position des aimants mobiles du rotor, par rapport aux bobines fixes du stator

De manière préférée, on emploiera un codeur optique à deux pistes (la détection ne se fait plus par cellules de HALL comme dans l'art antérieur mais par une piste optique supplémentaire).

L'homme de métier aura compris que l'on pourrait combiner le codeur optique à 260 cycles, avec une cellule de HALL remplissant la fonction de « top zéro ». Ceci obligerait par contre à gérer 2 technologies, l'une magnétique et l'autre optique, mais ceci est à la portée de l'homme de métier et fait partie du domaine de la présente invention.

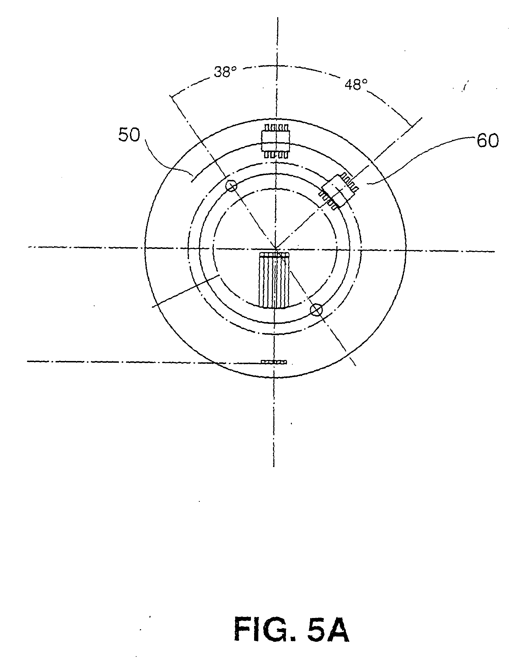

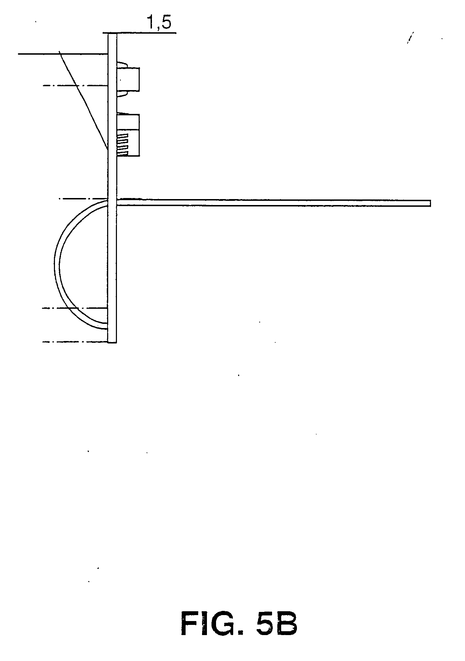

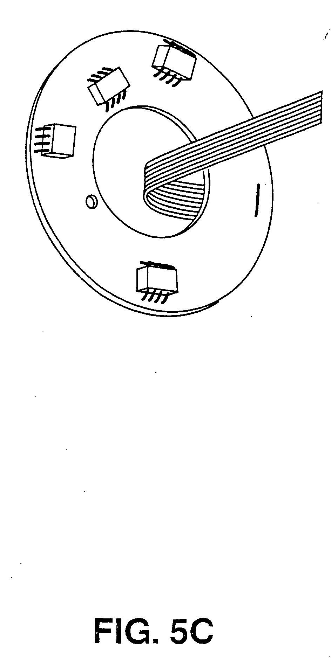

D'autres caractéristiques et avantages de l'invention seront mieux compris à la lecture de la description qui va suivre, et en se référant au dessin annexé sur lequel :

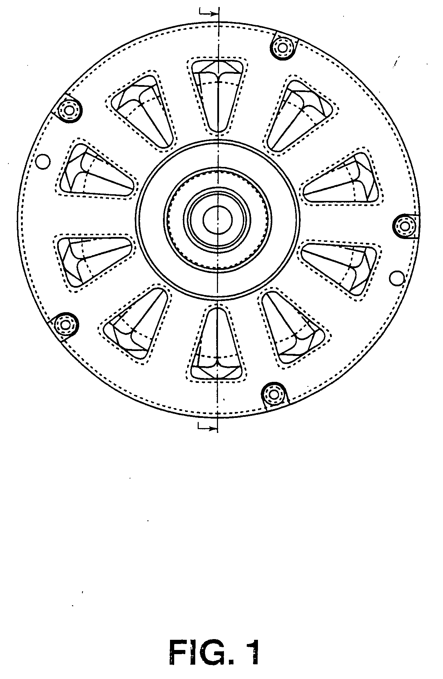

- la figure 1 représente une vue de face d'un exemple de poulie motorisée selon l'invention.

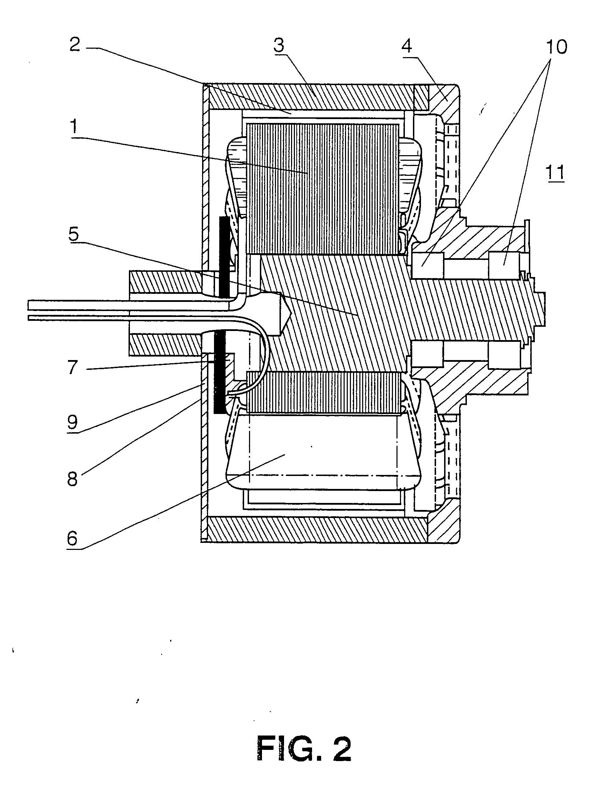

- la figure 2 représente une vue en coupe FF (*vue en coupe dans un plan diamétral et une vue intérieure permettant de visualiser les encoches stator et les pôles rotor)* de la figure 1 (cf. également figure 5) d'un mode de réalisation préféré mais non limitatif de la présente invention, sur laquelle les références ont les significations suivantes :
   - 1: tôle stator / paquet de fer stator
   - 2: aimants
   - 3: culasse du rotor
   - 4: flasque rotor
   - 5: axe stator
   - 6: bobinage
   - 7: circuit codeur
   - 8: support de disque codeur
   - 9: disque codeur
   - 10: roulements
   - 11: flasque poulie
- la figure 3, qui se compose des figures 3A, 3B, 3C, 3D, 3E représente le système codeur préféré selon l'invention. La figure 3A représente le support du disque codeur, la figure 3B représente le codeur en vue de face avec (à titre non limitatif) 4 cellules optiques et la figure 3C le codeur en vue de côté , la figure 3D représente le disque codeur et la figue 3E les secteurs ou « lumières » du disque codeur (zone A agrandie de la figure 3D).

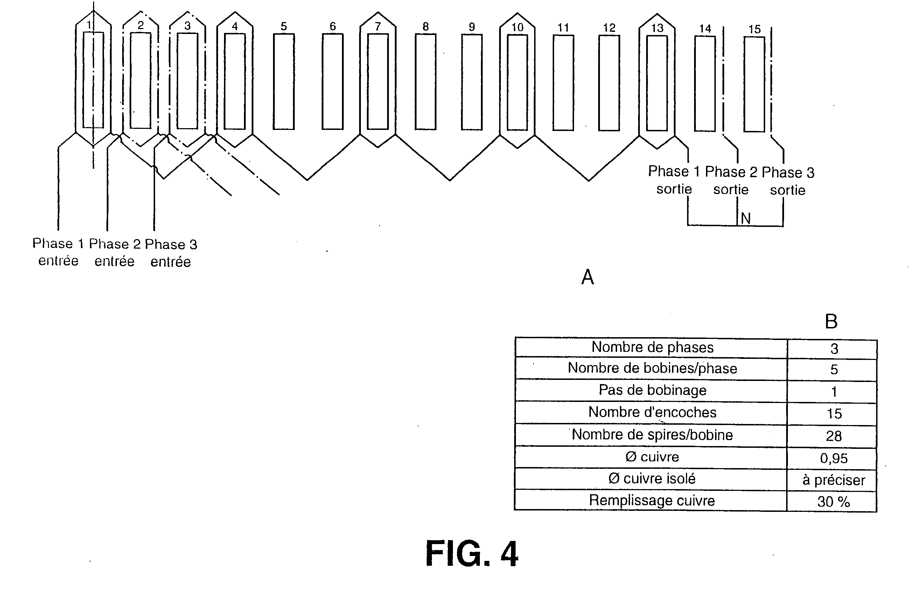

- la figure 4 représente les caractéristiques du bobinage selon un exemple non limitatif.
   Sur cette figure, les caractéristiques sont les suivantes :
   ° fils AWG 18 400 mm
   ° phase é et phase 3 identiques à phase 1 mais décalées d'une encoche.
   ° numérotation des dents sens horaire (cw)
   nombre de phases 3
   nombre de bobinages / phase 5
   pas du bobinage 1
   nombre d'encoches 15
   nombre de spires / bobine 28
   diamètre du cuivre 0,95
   remplissage cuivre 30 %
- la figure 5 représente le codeur selon l'invention.

L'invention sera mieux comprise à la lecture de la description qui va suivre, et des exemples non limitatifs ci-dessous.

Lorsque le moteur est alimenté de manière classique pour un moteur brushless à rotor externe, l'effet électromagnétique provoque comme on le sait la rotation du rotor (par son circuit magnétique mobile) autour du stator central fixe portant le bobinage.

La partie statorique est, selon un mode de réalisation particulier, non limitatif, de l'invention, montée sur un axe intérieur fixe, cet axe pouvant être fixé à l'une ou l'autre de ses extrémités, ou aux deux extrémités. Cet axe est équipé de deux roulements déportés (placés du même côté du stator) ou non, assurant un guidage en rotation du rotor extérieur.

On se réfèrera ci-dessous aux figures annexées.

Le rotor comporte un flasque (ou deux flasques ; un de chaque coté) 4 et une culasse 3.

L'axe 5 est fixe et supporte le paquet de fer stator 1 lequel est pourvu d'un bobinage 6 polyphasé (N phases et P paires de pôles), et d'un circuit codeur 7 à deux pistes . Sur cet axe sont montés deux roulements 10 permettant de rendre libre en rotation le flasque 4 tout en l'immobilisant en translation. La culasse magnétique 3 du rotor elle même équipée de ses aimants 2 est fixée sur le flasque 4. Sur cette culasse est fixée à son tour un support 8 de disque (optique) codeur , sur le coté opposé au flasque 4.

Enfin le disque optique 9 à deux pistes est positionné sur son disque support 8 face au circuit codeur 7.

Fonctionnement: chaque tour mécanique est composé de P cycles électriques complets du fait de la multipolarité. Chaque cycle électrique (360 °) peut être commandé indifféremment en mode sinus ou trapèze.
- Mode sinus : à partir de la référence angulaire absolue θ l'électronique de commande injecte dans chacune des phases un courant lo . sin P.(θ - φᵢ) où φᵢ représente le déphasage de chacune des phases.
- Mode trapèze : chaque cycle électrique de 360 ° est découpé en six séquences de 60 °. A chacune de ces 6 séquences correspond une configuration d'alimentation particulière optimisant les performances de couple dans cette plage angulaire. L'électronique de commande doit seulement identifier dans quelle plage angulaire de 60 ° le rotor se trouve pour commander la bonne séquence en courant continu.

Le principe général de commutation, commun à ces 2 types de commandes, est d'alimenter en courant les conducteurs électriques situés sous le champ magnétique des aimants, et de supprimer cette alimentation lorsque le bobinage se trouve dans une zone non soumise à champ magnétique.

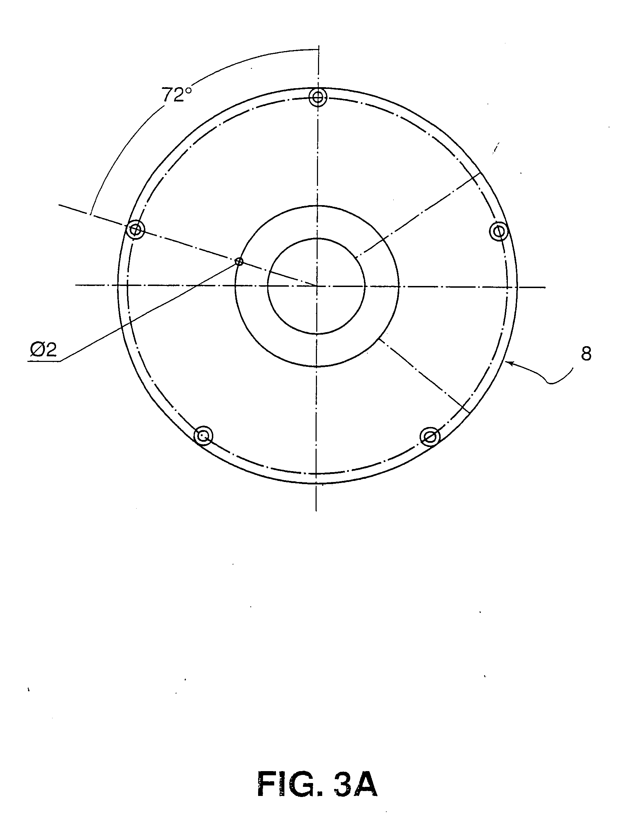

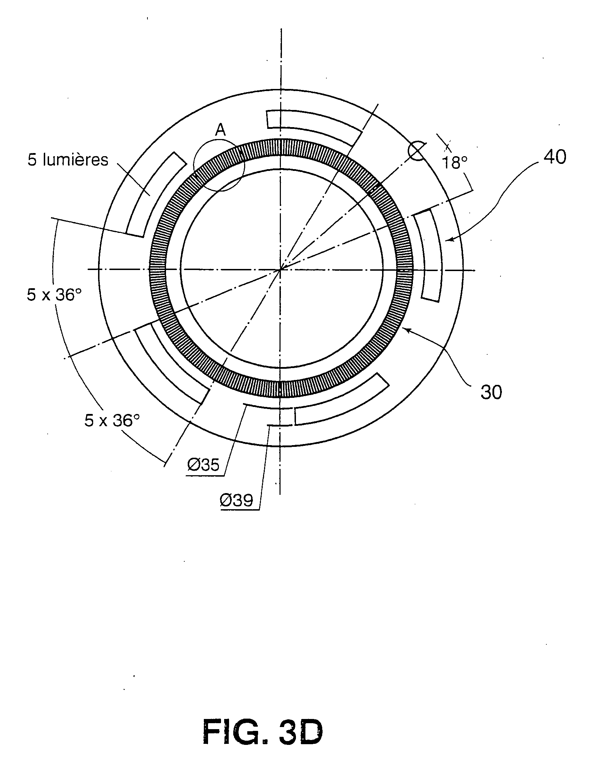

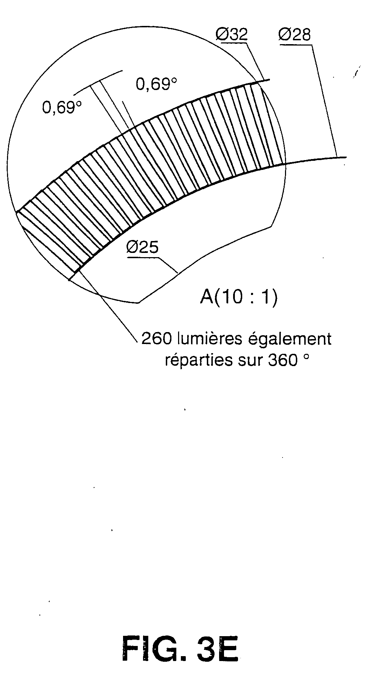

La première piste 30 du codeur optique est constituée d'un nombre important de zones réfléchissantes (260 dans ce cas particulier, cf. zone A figures 3D et 3E) ce qui, avec deux voies déphasées électriquement de 90°, permet d'obtenir 4 x 260 tops par tour et de connaître le sens de rotation. Cette piste 30 constitue donc un codeur optique relatif au sens classique du terme.

Le nombre de secteurs réfléchissants est lié d'une part à la cellule optique qui impose une largeur de secteur, et d'autre part au diamètre de la piste optique qui évolue proportionnellement avec ce nombre de secteurs. Le choix du nombre de secteurs peut donc être théoriquement quelconque, mais intervient directement sur la précision de position du rotor, donc sur celle de l'asservissement du moteur. L'homme de métier saura réaliser les adaptations et compromis nécessaires éventuellement.

Le composant utilisé actuellement est conçu pour un déphasage de 90° et on ne connaît pas à ce jour d'autre déphasage utilisable sur le marché. Par contre dans l'hypothèse de l'existence d'un tel composant (certainement réalisable) l'homme de métier pourra obtenir la même fonctionnalité, au moins en ce qui concerne le sens de rotation. Par contre l'asservissement de vitesse serait certainement rendu plus ardu par la dissymétrie des tops. Ces adaptations sont également à la portée de tout homme de métier.

La deuxième piste 40 est constituée de 2P (P = nombre de cycles électriques) secteurs *ou* «*lumières*». L'homme de métier aura compris que sur la piste optique existent donc P secteurs réfléchissants et P secteurs non réfléchissants. La cellule codeur à réflexion utilisée selon l'invention dans le meilleur mode actuel pourrait également être une cellule à transmission (dans ce cas le terme « lumières » trouve sa justification puisque le faisceau lumineux serait transmis par des ouvertures découpées dans le disque. Ces secteurs ont une ouverture angulaire identique, chaque secteur étant alternativement réfléchissant et non réfléchissant. Cette piste 40 présente donc la même symétrie périodique que le circuit magnétique et permet d'obtenir deux tops de référence absolue par tour électrique (modulo 360 ° / P). Par construction, la position de ces tops de références par rapport aux aimants est connue et maîtrisée. Par combinaison de cette information absolue avec les informations issues de la première piste il est possible comme le comprendra aisément l'homme de métier d'avoir une connaissance de la position angulaire absolue du rotor avec une précision d'environ 1/1000 de tour (cette précision est fonction du nombre de cycles du codeur).

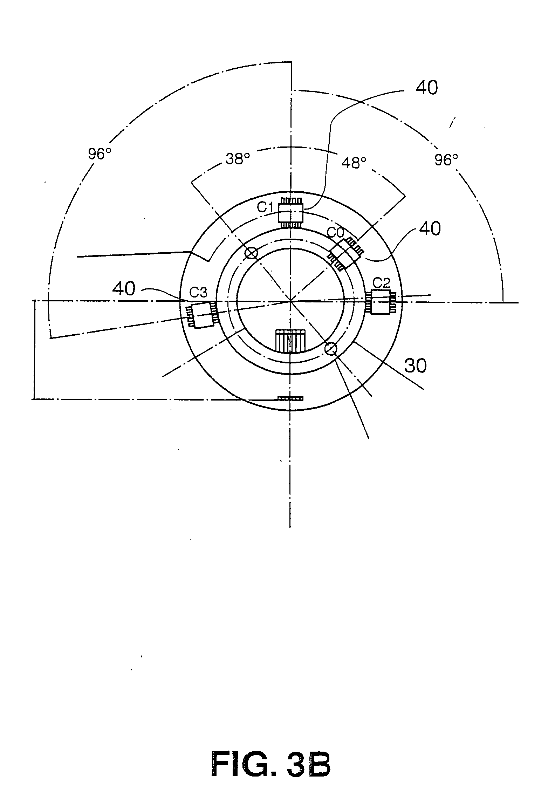

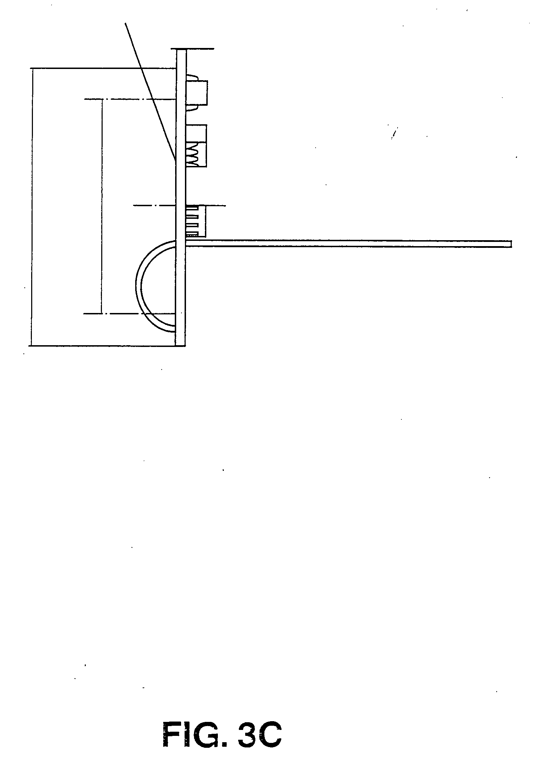

Sur les figures 3B et 3C (cette dernière en vue de côté) on distingue plusieurs cellules optiques, c'est-à-dire une cellule 30 sur la piste codeur diamètre 30 mm et trois cellules 40 sur la piste diamètre 37 mm. En effet ce circuit est celui des premiers prototypes qui devaient fonctionner avec une électronique standard, d'où la nécessité de 3 capteurs comme dans l'art antérieur. Ce montage permettra de comparer efficacement l'invention et l'art antérieur.

Sur la figure 5A on distingue par contre une cellule optique HEDR 8000 sur la piste codeur diamètre 37 mm et une cellule optique sur la piste codeur diamètre 30 mm. Ceci est le système de l'invention.

La cellule placée sur la piste de diamètre 30 mm réalise la fonction codeur au sens classique du terme avec un nombre de cycles de 260 par tour mécanique, avec voie A et B (décalée de 90° par rapport à A).

La cellule placée sur la piste de diamètre 37 mm, quant à elle, permet d'obtenir 2 tops absolus modulo 360° par tour électrique (ou 20 tops absolus par tour mécanique) dans l' application de l'invention. Ce qui, en combinaison avec les informations issues de la cellule précédente, permet de connaître la position angulaire absolue du rotor par rapport au bobinage statorique.

Ainsi, un seul capteur, au lieu de trois dans l'art antérieur, permet de connaître la position angulaire instantanée du rotor et donc, par des calculs élémentaires, la vitesse angulaire du rotor et donc la vitesse linéaire de l'élément commandé, notamment une porte. On connaît également, de la même manière et à partir d'un point de référence, la valeur absolue dudit déplacement. Des valeurs limites et seuils préenregistrés permettent de ralentir le mouvement à l'approche d'une extrémité, de le stopper précisément à cette extrémité, puis de l'inverser.

La figure 5B représente une vue de côté du système codeur de l'invention de la figure 5A et la figure 5C une vue en perspective.

On peut également incorporer un système de sécurité, notamment si le déplacement est freiné par un obstacle (détection du ralentissement ou de l'arrêt du mouvement, et ou mesure du couple etc.... ; et tous le systèmes de sécurité connus ou aisément adaptables).

### EXEMPLES

### Selon l'invention

On a construit un prototype dont les caractéristiques sont les suivantes :

| | |
|---|---|
| Dimensions | diamètre 110 mm ; longueur 60 mm |
| | |
| Nombre de pôles | 10 pôles |
| | |
| Diamètre stator, rotor, données concernant le bobinage, concernant les aimants, etc.... | |
| | |
| Paquet de tôles stator Aimants Bobinage | D 91,5 mm L 35 mm 15 encoches ; Dext 98,5 Dint 93,5 Long 37 mm 15 bobines (5 par phases) ; pas de bobinage 1 ; |
| | |
| Couple produit | 2,5 Nm en continu |
| | |
| Poids total | 2,7 Kg pour un volume de 0,6 dm3 soit 0,93 Nm/Kg |

### Exemple comparatif

Solution actuelle avec réducteur et codeur:
Masse de 2,1 Kg pour volume de 1,1 dm3
Couple permanent admissible 0.9 Nm soit 0,43 Nm/Kg

L'invention concerne encore un procédé pour commander le déplacement d'une porte ou dispositif mobile analogue, caractérisé en ce que on emploie un moteur selon l'invention et ledit capteur permet de connaître la position angulaire instantanée du rotor et donc la vitesse angulaire du rotor et donc la vitesse linéaire de l'élément commandé, notamment une porte, et en ce que l'on connaît également, de la même manière et à partir d'un point de référence, la valeur absolue dudit déplacement, des valeurs limites et seuils préenregistrés permettent de ralentir le mouvement à l'approche d'une extrémité, de le stopper précisément à cette extrémité, puis de l'inverser, on peut également incorporer un système de sécurité, notamment si le déplacement est freiné par un obstacle (détection du ralentissement ou de l'arrêt du mouvement, et ou mesure du couple etc.... ; et tous le systèmes de sécurité connus ou aisément adaptables).

L'invention couvre encore toutes les applications du moteur ou du procédé décrits ci-dessus à la commande de portes et de tous dispositifs mobiles analogues, c'est-à-dire posant les mêmes problèmes techniques et les mêmes contraintes, et à
- toutes transmissions par courroie : robot de manutention, machine de transfert automatique
- tout système extrapolé aux entraînements pignon crémaillère et galets de friction
- toute motorisation de roue pour chariot, véhicule, chariot de type « Fenwick » ™, trottinette ou autres deux roues, robots de manutention / transports dans les ateliers automatisés, notamment circulant par conduite sur rail ou bande magnétique, par intégration du moteur dans le moyeu
- tout moteur haute vitesse : le rotor extérieur permet de supprimer le problème d'éclatement des aimants par force centrifuge et permet ainsi d'augmenter considérablement la vitesse limite des moteurs BRUSHLESS. Axe de broche de machine outil, visseuses, éventuellement certains appareils ménagers, de jardinage (coupe-fil , outils de coupe et de taille portable etc...), etc....
- motorisation de rouleaux pour applications de caisse enregistreuse, (« check out »), d'imprimantes pour sortie de listings divers, motorisation d'affichage publicitaires ou d'information (aéroports, gares) évolutifs, de tout système de transport, manutention, gestion automatique de commandes par chariots dans des entrepôts de stockage, toute bande transporteuse ou tapis transporteur,
- et de manière générale tout système à déplacement et cinématique comparable à ce qui vient d'être décrit, avec également les adaptations évidentes pour l'homme de métier ;
avec les adaptations qui serons directement accessibles à tout homme de métier,
et donc (rappel)
- toutes portes automatique piétonne , d'ascenseur ou de monte-charge, de garage, de portail, tout système adapté pour une commande de barrière basculante ou roulant sur galets,
- rouleaux de convoyeurs
- applications d'affichage publicitaire à déroulement, à usage notamment d'affichage municipal, dans les stades et lieux analogues tels que aéroports, etc....

L'invention couvre également tous les modes de réalisation et toutes les applications qui seront directement accessibles à l'homme de métier à la lecture de la présente demande, de ses connaissances propres, et éventuellement d'essais simples de routine

## Revendications

1. Moteur « brushless » (« sans balais ») du type à stator interne bobiné et rotor externe, **caractérisé en ce que** :
- il comporte un circuit magnétique multipolaire comportant un nombre de pôles fonction de la vitesse et du couple visés, notamment 2, 4, 6, 8 pour obtenir une vitesse élevée ou > 10, notamment 10, 12, 14, 16, ..... pour obtenir un couple élevé
- le rotor externe comporte le circuit magnétique mobile,
- il transmet le couple directement par un moyen mécanique fixé sur le rotor externe ;
- il comporte un capteur intégré de position du rotor.

2. Moteur selon la revendication 1 **caractérisé en ce que** la surface extérieure dudit rotor externe forme le profil du moyen d'entraînement, notamment celui d'une poulie d'entraînement.

3. Moteur selon la revendication 1 ou 2 **caractérisé en ce que** le nombre de pôles magnétiques est compris entre 2 et un nombre dépendant de la vitesse et du couple visés, notamment 2, 4, 6, 8 pour obtenir une vitesse élevée ou > 10, notamment 10, 12, 14 16, ..... pour obtenir un couple élevé

4. Moteur selon l'une quelconque des revendications 1 à 3 **caractérisé en ce que** ledit capteur de position consiste en un moyen permettant de détecter la position des aimants mobiles du rotor, par rapport aux bobines fixes du stator

5. Moteur selon la revendication 4 **caractérisé en ce que** on emploiera comme capteur de position un codeur optique à deux pistes.

6. Moteur selon la revendication 5 **caractérisé en ce que** on combine le codeur optique à 260 cycles, avec une cellule de HALL remplissant la fonction de « top zéro ».

7. Moteur selon l'une quelconque des revendications 1 à 6 **caractérisé en ce que** la partie statorique est montée sur un axe intérieur fixe, cet axe pouvant être fixé à l'une ou l'autre de ses extrémités, ou aux deux extrémités, et cet axe est équipé de deux roulements déportés (placés du même côté du stator) ou non, assurant un guidage en rotation du rotor extérieur.

8. Moteur selon l'une quelconque des revendications 1 à 7 **caractérisé en ce que** le rotor comporte un flasque (ou deux flasques ; un de chaque coté) 4 et une culasse 3, l'axe 5 est fixe et supporte le paquet de fer stator 1 lequel est pourvu d'un bobinage 6 polyphasé (N phases et P paires de pôles), et d'un circuit codeur 7 à deux pistes ; sur cet axe sont montés deux roulements 10 permettant de rendre libre en rotation le flasque 4 tout en l'immobilisant en translation ; la culasse magnétique 3 du rotor elle même équipée de ses aimants 2 est fixée sur le flasque 4 ; sur cette culasse est fixée à son tour un support 8 de disque (optique) codeur , sur le coté opposé au flasque 4, et le disque optique 9 à deux pistes est positionné sur son disque support 8 face au circuit codeur 7.

9. Moteur selon la revendication 7 ou 8 **caractérisé en ce que** chaque tour mécanique est composé de P cycles électriques complets du fait de la multipolarité, et chaque cycle électrique (360 °) peut être commandé indifféremment en mode sinus ou trapèze.
- Mode sinus : à partir de la référence angulaire absolue θ l'électronique de commande injecte dans chacune des phases un courant lo . sin P.(θ - φᵢ) où φᵢ représente le déphasage de chacune des phases.
- Mode trapèze : chaque cycle électrique de 360 ° est découpé en six séquences de 60 ° ; à chacune de ces 6 séquences correspond une configuration d'alimentation particulière optimisant les performances de couple dans cette plage angulaire, l'électronique de commande devant seulement identifier dans quelle plage angulaire de 60 ° le rotor se trouve pour commander la bonne séquence en courant continu, le principe général de commutation, commun à ces 2 types de commandes, étant d'alimenter en courant les conducteurs électriques situés sous le champ magnétique des aimants, et de supprimer cette alimentation lorsque le bobinage se trouve dans une zone non soumise à champ magnétique.

10. Moteur selon l'une quelconque des revendications 8 à 9 **caractérisé en ce que** la première piste 30 du codeur optique est un codeur optique relatif constitué d'un nombre important de zones réfléchissantes notamment 260, avec deux voies déphasées électriquement de 90°, ce qui donne 4 x 260 tops par tour et donne le sens de rotation.

11. Moteur selon l'une quelconque des revendications 8 à 10 **caractérisé en ce que** le nombre de secteurs réfléchissants est un compromis fonction d'une part à la cellule optique qui impose une largeur de secteur, et d'autre part au diamètre de la piste optique qui évolue proportionnellement avec ce nombre de secteurs, et intervient directement sur la précision de position du rotor, donc sur celle de l'asservissement du moteur.

12. Moteur selon l'une quelconque des revendications 8 à 11 **caractérisé en ce que** la deuxième piste 40 est constituée de 2P (P = nombre de cycles électriques) secteurs *ou* «*lumières*» (la cellule codeur à réflexion utilisée pourrait également être une cellule à transmission) ; sur la piste optique existent donc P secteurs réfléchissants et P secteurs non réfléchissants; ces secteurs ont une ouverture angulaire identique, chaque secteur étant alternativement réfléchissant et non réfléchissant et cette piste 40 présente donc la même symétrie périodique que le circuit magnétique et permet d'obtenir deux tops de référence absolue par tour électrique (modulo 360 ° / P).

13. Moteur selon la revendication 12 **caractérisé en ce que**, par construction, la position de ces tops de références par rapport aux aimants est connue et maîtrisée et **en ce que**, par combinaison de cette information absolue avec les informations issues de la première piste la position angulaire absolue du rotor présente une précision d'environ 1 /1000 de tour cette précision étant fonction du nombre de cycles du codeur.

14. moteur selon l'une quelconque des revendications 1 à 13 **caractérisé en ce que** un seul capteur permet de connaître la position angulaire instantanée du rotor et donc la vitesse angulaire du rotor et donc la vitesse linéaire de l'élément commandé, notamment une porte.

15. Moteur selon l'une quelconque des revendications 1 à 14 **caractérisé en ce que** ses caractéristiques sont les suivantes :
| | |
|---|---|
| Dimensions | diamètre 110 mm ; longueur 60 mm |
| | |
| Nombre de pôles | 10 pôles |
| | |
| Diamètre stator, rotor, données concernant le bobinage, concernant les aimants,.... | |
| | |
| Paquet de tôles stator Aimants Bobinage | D 91,5 mm L 35 mm 15 encoches Dext 98,5 Dint 93,5 Long 37 mm 15 bobines (5 par phases) ; pas de bobinage 1 ; |
| | |
| Couple produit | 2,5 Nm en continu |
| | |
| Poids total | 2,7 Kg pour un volume de 0,6 dm3 soit 0,93 Nm/Kg |

16. Moteur selon l'une quelconque des revendications 1 à 15 **caractérisé en ce que** on utilise comme codeur une cellule optique sur la piste codeur diamètre 37 mm et une cellule optique sur la piste codeur diamètre 30 mm ,la cellule placée sur la piste de diamètre 30 mm réalisant la fonction codeur au sens classique du terme avec un nombre de cycles de 260 par tour mécanique, avec voie A et B (décalée de 90° par rapport à A), tandis que la cellule placée sur la piste de diamètre 37 mm, quant à elle, permet d'obtenir 2 tops absolus modulo 360° par tour électrique (ou 20 tops absolus par tour mécanique) ce qui, en combinaison avec les informations issues de la cellule précédente, permet de connaître la position angulaire absolue du rotor par rapport au bobinage statorique.

17. Procédé pour commander le déplacement d'une, porte ou dispositif mobile analogue, **caractérisé en ce que** on emploie un moteur selon l'une quelconque des revendications 1 à 16 et ledit capteur permet de connaître la position angulaire instantanée du rotor et donc la vitesse angulaire du rotor et donc la vitesse linéaire de l'élément commandé, notamment une porte, et **en ce que** l'on connaît également, de la même manière et à partir d'un point de référence, la valeur absolue dudit déplacement, des valeurs limites et seuils préenregistrés permettent de ralentir le mouvement à l'approche d'une extrémité, de le stopper précisément à cette extrémité, puis de l'inverser, on peut également incorporer un système de sécurité, notamment si le déplacement est freiné par un obstacle (détection du ralentissement ou de l'arrêt du mouvement, et ou mesure du couple .... ; et tous le systèmes de sécurité connus ou aisément adaptables).

18. Procédé selon la revendication 17 **caractérisé en ce que** on emploie comme codeur une cellule optique sur la piste codeur diamètre 37 mm et une cellule optique sur la piste codeur diamètre 30 mm , la cellule placée sur la piste de diamètre 30 mm réalise la fonction codeur au sens classique du terme avec un nombre de cycles de 260 par tour mécanique, avec voie A et B (décalée de 90° par rapport à A), tandis que la cellule placée sur la piste de diamètre 37 mm, quant à elle, permet d'obtenir 2 tops absolus modulo 360° par tour électrique (ou 20 tops absolus par tour mécanique) ce qui, en combinaison avec les informations issues de la cellule précédente, permet de connaître la position angulaire absolue du rotor par rapport au bobinage statorique.

19. Applications du moteur selon l'une quelconque des revendications 1 à 16 ou du procédé selon la revendication 17 ou 18 à la commande de portes et dispositifs mobiles analogues, et à
- la commande de portes et dispositifs mobiles analogues, et à
- toutes transmissions par courroie : robot de manutention, machine de transfert automatique
- tout système extrapolé aux entraînements pignon crémaillère et galets de friction
- toute motorisation de roue pour chariot, véhicule, chariot de type « Fenwick » ™, trottinette ou autres deux roues, robots de manutention / transports dans les ateliers automatisés, notamment circulant par conduite sur rail ou bande magnétique, par intégration du moteur dans le moyeu
- tout moteur haute vitesse : le rotor extérieur permet de supprimer le problème d'éclatement des aimants par force centrifuge et permet ainsi d'augmenter considérablement la vitesse limite des moteurs BRUSHLESS. Axe de broche de machine outil, visseuses, éventuellement certains appareils ménagers, de jardinage (coupe-fil , outils de coupe et de taille portable etc... ) , etc....
- motorisation de rouleaux pour applications de caisse enregistreuse, (« check out »), d'imprimantes pour sortie de listings divers, motorisation d'affichage publicitaires our d'indormation (aéroports, gares) évolutifs, de tout système de transport, manutention, gestion automatique de commandes par chariots dans des entrepôts de stockage, toute bande transporteuse ou tapis transporteur,
- et de manière générale tout système à déplacement et cinématique comparable à ce qui vient d'être décrit, avec également les adaptations évidentes pour l'homme de métier ; avec les dapatations qui serons directement accessibles à tout homme de métier,
- toutes portes automatique piétonne , d'ascenseur ou de monte-charge, de garage, de portail, tout système adapté pour une commande de barrière basculante ou roulant sur galets,
- rouleaux de convoyeurs
applications d'affichage publicitaire à déroulement, à usage notamment d'affichage municipal, dans les stades et lieux analogues, tels que aéroports, etc....
